# EUROPÄISCHE PATENTANMELDUNG

(11) **EP 2 099 166 A1**
(43) Veröffentlichungstag der Anmeldung: **09.09.2009**
(21) Anmeldenummer: 09154284.5
(22) Anmeldetag: 04.03.2009
(51) Int. Cl.: H04L 12/417

(54) **Elektronische Steuer- und Diagnoseeinrichtung zum Betreiben einer Ventileinheit**

(30) Priorität: 05.03.2008 DE 102008012730
(71) Anmelder: Robert Bosch GmbH, 70442 Stuttgart (DE)
(72) Erfinder: Döhring, Steffen, 16278, Angermünde (DE)
(74) Vertreter: Kietzmann, Lutz

(57) **Zusammenfassung**

Elektronische Steuer- und Diagnoseeinrichtung zum Betreiben einer Ventileinheit mit einer Hauptsteuereinheit (1) und einer der Anzahl an Ventilen entsprechenden Zahl an Ventilsteuereinheiten (2a-2d), welche jeweils Empfangseingänge (7, 6a-6d) und Sendeausgänge (5, 8a-8d) zur gegenseitigen Kommunikation aufweisen, wobei der Sendeausgang (5) der Hauptsteuereinheit (1) über eine gemeinsame Empfangsleitung (3) mit den Empfangseingängen (6a-6d) der Ventilsteuereinheiten (2a-2d) und der Empfangseingang (7) der Hauptsteuereinheit (1) über eine gemeinsame Sendeleitung (4) mit den Sendeausgängen (8a-8d) der Ventilsteuereinheiten (2a-2d) verbunden ist, wobei ferner die Hauptsteuereinheit (1) sowie die Ventilsteuereinheiten (2a-2d) zusätzliche Anschlüsse aufweisen und über diese durch Ansteuerleitungen (9a-9d) nach Art eines eines Tokenrings aneinandergereiht sind.

## Beschreibung

### Gebiet der Erfindung

Die Erfindung betrifft eine elektronische Steuer- und Diagnoseeinrichtung zum Betreiben einer Ventileinheit mit einer Hauptsteuereinheit und einer, der Anzahl an Ventilen entsprechenden Zahl an Ventilsteuereinheiten, welche jeweils Empfangseingänge und Sendeausgänge zur gegenseitigen Kommunikation aufweisen, wobei der Sendeausgang der Hauptsteuereinheit über eine gemeinsame Empfangsleitung mit den Empfangseingängen der Ventilsteuereinheiten und der Empfangseingang der Hauptsteuereinheit über eine gemeinsame Sendeleitung mit den Sendeausgängen der Ventilsteuereinheiten verbunden ist.

### Hintergrund der Erfindung

Im Bereich der Ventilsteuerung werden mit steigenden Anforderungen an Geschwindigkeit sowie Diagnoseparametern des Systems immer leistungsstärkere Kommunikation nötig. Allgemein werden im Bereich der Ansteuerungstechnik inzwischen vermehrt Bussysteme eingesetzt, bei welchen zwischen Hardwarekomponenten ein Datenaustausch über ein Leitungssystem, dem eigentlichen Bus, stattfindet. Hierbei findet der Datenaustausch zwischen den einzelnen Busteilnehmern über fest definierte Protokolle statt. Im Allgemeinen handelt es sich bei mindestens einem der Busteilnehmer um ein Bauteil übergeordneter Funktionalität, welches als Hauptsteuereinheit mit den als Bauteile mit untergeordneter Funktionalität ausgebildeten Teilnehmern kommuniziert. Bei der Hauptsteuereinheit, welche normalerweise auch als Master bezeichnet wird, handelt es sich üblicherweise um einen leistungsfähigen Prozessrechner, während die normalerweise als Slaves bezeichneten Bausteine untergeordneter Funktionalität im einfachsten Fall auch als Sensoren oder Aktoren ausgebildet sein können.

Bei den meisten Bussystemen wird zur Übertragung von Daten von der Hauptsteuereinheit zu den untergeordneten Steuereinheiten mit einer Adressierung gearbeitet, um ein gesendetes Datenpaket einem Busteilnehmer zuweisen zu können.

### Stand der Technik

Aus der DE 10 2004 021 089 A1 ist ein derartiges Bussystem bekannt, bei welchem eine Hauptsteuereinheit über eine gemeinsame Busleitung mit anderen Busteilnehmern verbunden ist. Über die gemeinsame Busleitung können hierbei von jedem Teilnehmer Daten gesendet und empfangen werden. Die Busteilnehmer weisen jeweils eine individuelle Adresse auf, um die gesendeten Datenpakete einem bestimmten Empfänger zuweisen zu können. Um diese Adressen auch während des Betriebes des Bussystems verändern zu können, bzw. neue Adressen vergeben zu können, sind neben der gemeinsamen Busleitung zusätzliche Verbindungsleitungen jeweils zwischen der Hauptsteuereinheit und jedem Busteilnehmer vorhanden. Über diese jeweilige, zusätzliche Verbindungsleitung kann die Hauptsteuereinheit den einzelnen Busteilnehmer selektiv anwählen, diesen in einen aktiven Zustand versetzen und ihm eine neue Adresse zuordnen, welche dieser im Anschluss daran speichert.

Aus der DE 195 45 566 C2 ist ein weiteres Bussystem bekannt, bei welchem die einzelnen Busteilnehmer in Form eines Tokenringes aneinandergereiht sind. Dabei wird ein mit einer Adressierung versehenes Datenpaket ausgehend von der Hauptsteuereinheit von Busteilnehmer zu Busteilnehmer weitergereicht, wobei die jeweiligen Untersteuereinheiten die an sie adressierten Daten verarbeiten, aus dem Datenpaket herauslöschen und neue Daten für die Hauptsteuereinheit anhängen.

Nachteilhaft am bekannten Stand der Technik ist, dass zur Zuordnung eines Datenpaktes zu einem Busteilnehmer diesem eine Adresse zugeordnet werden muss. Eine derartige Adresszuordnung hat beim Starten des Systems oder bei Austausch von Komponenten stattzufinden. Außerdem müssen die zu versendenden Datenpakete zwecks einer Zuordnung eine Adressierung aufweisen, was deren Datengröße und folglich auch die Datenbelastung des Bussystem erhöht.

### Aufgabe der Erfindung

Es ist daher die Aufgabe der Erfindung, eine Steuer- und Diagnoseeinrichtung zu schaffen, bei welcher auf eine Adressvergabe verzichtet werden kann und somit die gesendeten Daten verkleinert werden können.

### Zusammenfassung der Erfindung

Die Aufgabe wird vorrichtungstechnisch ausgehend von einer elektronischen Steuer- und Diagnoseeinrichtung gemäß dem Oberbegriff von Anspruch 1 in Verbindung mit dessen kennzeichnenden Merkmalen gelöst. Verfahrenstechnisch wird die Aufgabe gemäß dem Oberbegriff des Anspruchs 5 in Verbindung mit dessen kennzeichnenden Merkmalen gelöst. Die jeweils sich rückbeziehenden, abhängigen Ansprüche geben vorteilhafte Weiterbildungen der Erfindung wieder. Bezüglich eines Computerprogrammprodukts zur Ausführung der Erfindung sowie eines Datenträgers zu dessen Speicherung wird auf die Ansprüche 11 und 12 verwiesen.

Die Erfindung schließt die technische Lehre ein, dass eine Hauptsteuereinheit sowie Ventilsteuereinheiten zusätzliche Anschlüsse aufweisen und über diese durch Ansteuerleitungen nach Art eines Tokenrings aneinandergereiht sind. Bei Betrieb wird über diese Aneinanderreihung ein Signal in Form einer Lese- und Schreibberichtigung weitergereicht, wodurch die jeweilige, das Signal empfangene Ventilsteuereinheit von einem passiven in einen aktiven Zustand versetzt wird. In diesem Zustand ist die Ventilsteuereinheit in der Lage, Daten von der Hauptsteuereinheit zu empfangen und Daten an diese zu senden. Im Anschluss daran leitet die aktivierte Ventilsteuereinheit das Signal zur Lese- und Schreibberechtigung an die benachbarte Steuereinheit weiter und kehrt anschließend in den passiven Zustand zurück. Durch diese Anordnung und mittels dieses Verfahrens ist es möglich, Datenpakete ohne Definition eines Adressaten und ohne Adressvergabe der einzelnen Busteilnehmer zu versenden, weil nur die jeweils aktivierte Ventilsteuereinheit in der Lage ist, Daten zu empfangen und zu senden. Aufgrund des Wegfalls der Adressierung ist es demnach möglich, die Datenpakete kleiner zu gestalten. Zudem ist beim Ausbau oder Tausch eines Busteilnehmers keine neue Adressvergabe nötig.

Gemäß einer vorteilhaften Weiterbildung der Erfindung findet eine Spannungsversorgung der Ventilsteuereinheiten mittels Versorgungsleitungen über die Hauptsteuereinheit statt. Dies hat den Vorteil, dass die einzelnen Ventilsteuereinheiten nicht jeweils separat mit einer Stromquelle verbunden werden müssen.

Gemäß einem weiteren Ausführungsbeispiel der Erfindung weisen die Hauptsteuereinheit und die Ventilsteuereinheiten LED's zum Anzeigen von Übertragungs- und Kommunikationsfehlern auf. Durch diese Maßnahme kann auf einfache Art und Weise auf das Auftreten eines Fehlers hingewiesen werden.

In Weiterbildung der Erfindung ist zusätzlich auch eine Ansteuerleitung zwischen der letzten Ventilsteuereinheit der Aneinanderreihung und der Hauptsteuereinheit vorgesehen. Dadurch kann die letzte Ventilsteuereinheit der Aneinanderreihung das Signal zur Lese- und Schreibberechtigung an die Hauptsteuereinheit weitergeben, wodurch dieser angedeutet wird, dass die Aneinanderreihung einmal komplett durchlaufen wurde und mit allen Ventilsteuereinheiten kommuniziert wurde.

Gemäß einer weiteren vorteilhaften Ausgestaltung der Erfindung werden Datenübertragungen ausgehend von der Hauptsteuereinheit zu den Ventilsteuereinheiten mittels einer Timerfunktion in konstanten Zeitabständen durchgeführt. Vorteilhaft ist hierbei, dass die Zykluszeit des Systems konstant gehalten werden kann und Datenübertragungen von der Hauptsteuereinheit zu der jeweils aktiven Ventilsteuereinheit in konstanten Zeitabständen durchgeführt werden.

Entsprechend einer weiteren Ausführung der Erfindung wird der Prozess des Versetzens der jeweiligen Ventilsteuereinheit in einen aktiven Zustand und der Rückkehr in den passiven Zustand gemäß einer festen Interrupt-Routine durchgeführt. Auf diese Art und Weise wird für eine zuverlässige Aktivierung und Deaktivierung der jeweiligen Ventilsteuereinheiten gesorgt.

In Weiterbildung der Erfindung wird bei jedem Senden eines Datenpakets der Hauptsteuereinheit zu der jeweils aktiven Ventilsteuereinheit ein Bit gesetzt, welches bei einer Antwort in Form des Sendens eines Datenpakets durch die jeweils aktive Ventilsteuereinheit wieder rückgesetzt wird. Durch diese Maßnahme kann durch ein nicht zurückgesetztes Bit der Hauptsteuereinheit kenntlich gemacht werden, dass eine angesprochene Ventilsteuereinheit nicht antwortet. Somit kann beispielsweise eine fehlerhafte Einheit detektiert werden. Zudem ist es möglich, mittels dieses Bits ein eventuell auftretendes Zeitproblem zu erkennen.

Gemäß einer weiteren, vorteilhaften Ausgestaltung der Erfindung wird, falls jede Ventilsteuereinheit nicht innerhalb einer Zeitspanne von 4 ms von der Hauptsteuereinheit ein Datenpaket erhält, dies durch die jeweilige LED der Ventilsteuereinheit angezeigt. Dadurch ist es möglich, Übertragungs- und Kommunikationsfehler einzugrenzen, wenn beispielsweise das Signal zur Lese- und Schreibberechtigung an einem Glied der Aneinanderreihung nicht weitergegeben wird.

In Weiterbildung der Erfindung wird die Anzahl an Ventilsteuereinheiten in der Hauptsteuereinheit vor Beginn der Kommunikation festgelegt. Dies hat den Vorteil, dass die Hauptsteuereinheit somit die genaue Information hat, an wie viele Ventilsteuereinheiten Daten zu senden und wie viele Daten dementsprechend zu erhalten sind.

Die erfindungsgemäße Lösung lässt sich auch als Computerprogrammprodukt verkörpern, welches, wenn es auf den Prozessoren der Hauptsteuereinheit sowie der Ventilsteuereinheiten läuft, die Prozessoren softwaremäßig anleitet, die zugeordneten erfindungsgegenständlichen Verfahrensschritte durchzuführen.

In diesem Zusammenhang gehört auch ein computerlesbares Medium zum Gegenstand der Erfindung, auf dem ein vorstehend beschriebenes Computerprogrammprodukt abrufbar gespeichert ist.

Weitere, die Erfindung verbessernden Maßnahmen werden nachstehend gemeinsam mit der Beschreibung eines bevorzugten Ausführungsbeispiels der Erfindung anhand der Figuren näher dargestellt.

### Kurzbeschreibung der Zeichnungen

Es zeigt:
- Fig. 1: eine schematische Ansicht der erfindungsgemäßen elektronischen Steuer- und Diagnoseeinrichtung; und
- Fig. 2a-e: schematische Ansichten der einzelnen Verfahrensschritte.

### Ausführliche Beschreibung der Zeichnungen

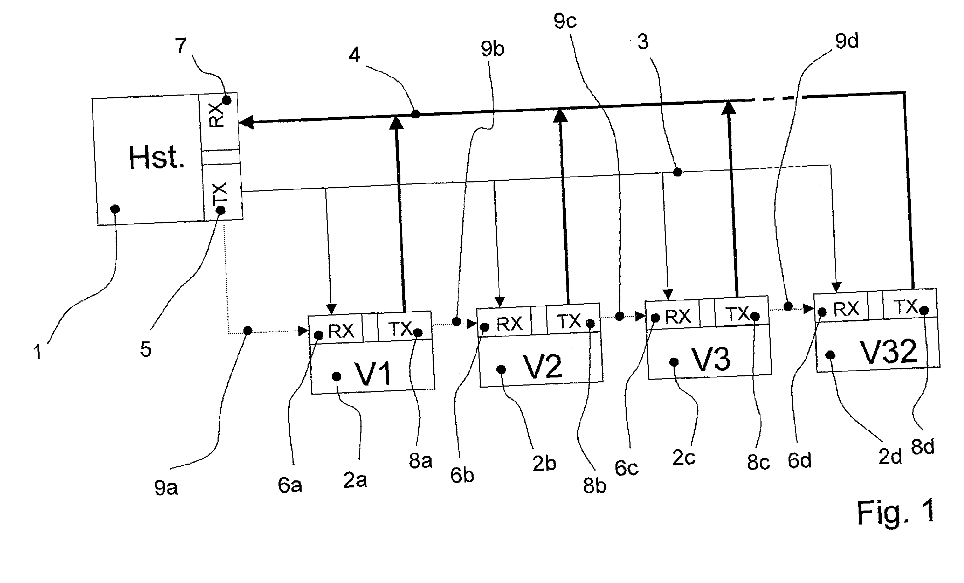

In Fig. 1 ist eine schematische Ansicht der erfindungsgemäßen elektronischen Steuer- und Diagnoseeinrichtung zu sehen, bei welcher eine Hauptsteuereinheit 1 mit Ventilsteuereinheiten 2a-2d über eine gemeinsame Empfangsleitung 3 und eine gemeinsame Sendeleitung 4 verbunden ist. Hierbei ist ein Sendeausgang 5 der Hauptsteuereinheit 1 über die besagte gemeinsame Empfangsleitung 3 mit den Empfangseingängen 6a-6d der Ventilsteuereinheiten 2a-2d verbunden, während Sendeausgänge 8a-8d der Ventilsteuereinheiten 2a-2d über die gemeinsame Sendeleitung 4 mit einem Empfangseingang 7 der Hauptsteuereinheit 1 in Verbindung stehen. Über die Sendeleitung 3 kann die Hauptsteuereinheit 1 Datenpakete an alle Ventilsteuereinheiten 2a-2d senden und Antworten in Form von Datenpaketen von allen Ventilsteuereinheiten 2a-2d über die Sendeleitung 4 empfangen. Des Weiteren ist die Hauptsteuereinheit über eine zusätzliche Ansteuerleitung 9a mit der Ventilsteuereinheit 2a verbunden. Im Folgenden ist dann die Ventilsteuereinheit 2a über eine Ansteuerleitung 9b mit der Ventilsteuereinheit 2b verbunden, welche wiederum über die Ansteuerleitung 9c mit der Ventilsteuereinheit 2c in Verbindung steht. Diese Aneinanderreihung setzt sich bis zur letzten Ventilsteuereinheit 2d fort. Hierbei ist anzumerken, dass zwischen der Ventilsteuereinheit 2c und der Ventilsteuereinheit 2d eine unbestimmte Anzahl an Ventilsteuereinheiten sitzen kann. Dem Fachmann wird klar sein, dass die Durchlaufzeit des Systems von dieser Anzahl abhängt. Zudem wird klar sein, dass eine bestimmte Mindestdurchlaufzeit des Systems gegeben sein muss, damit ein zuverlässiges Arbeiten der einzelnen Ventilsteuereinheiten gewährleistet ist.

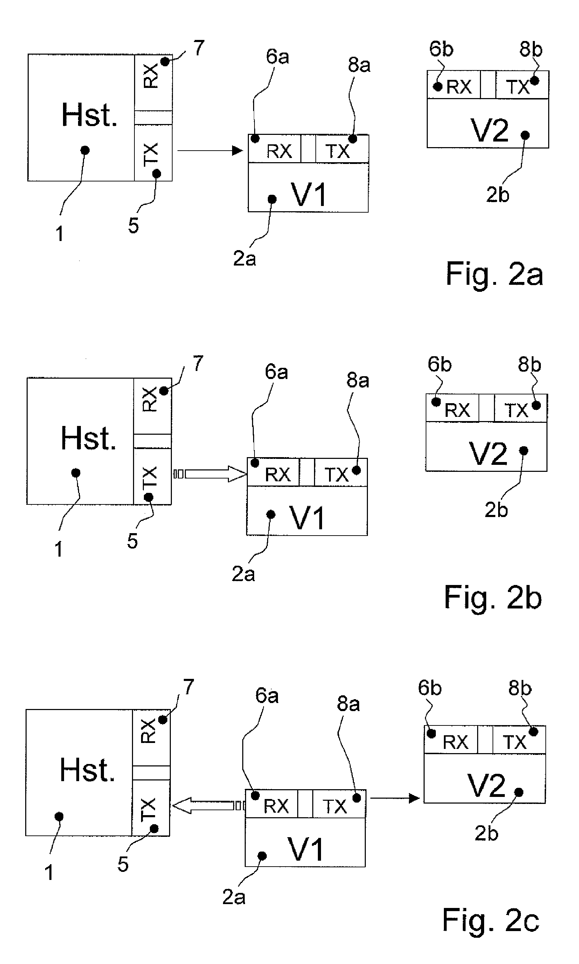

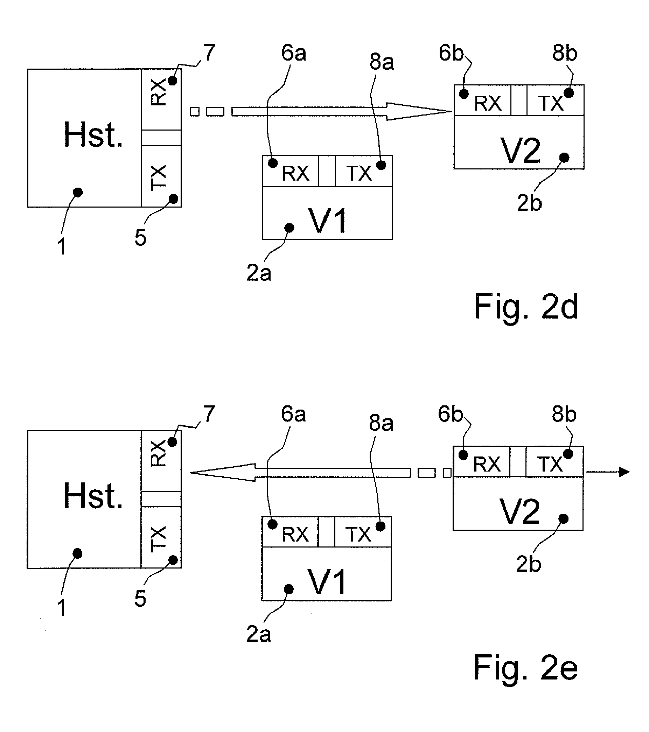

Der Ablauf der Kommunikation zwischen der Hauptsteuereinheit 1 und den Ventilsteuereinheiten 2a-2d ist in den einzelnen Schritten in Fig.2a-2e dargestellt. In Fig.2a wird durch die Hauptsteuereinheit 1 über die hier nicht dargestellte Ansteuerleitung 9a ein Signal in Form einer Lese- und Schreibberechtigung an die Ventilsteuereinheit 2a gesendet. Diese Lese- und Schreibberechtigung ist als dünner Pfeil dargestellt und aktiviert den Empfangseingang 6a der Ventilsteuereinheit 2a. Im folgenden Schritt, dargestellt in Fig.2b, kann die Ventilsteuereinheit 2a deswegen ein Steuerdatenpaket von der Hauptsteuereinheit 1 empfangen, welches als dicker Pfeil dargestellt ist. Da nur der Empfangseingang 6a der Ventilsteuereinheit 2a im Gegensatz zu den übrigen Empfangseingängen der anderen Ventilsteuereinheiten aktiviert ist, kann nur diese Ventilsteuereinheit 2a das Datenpaket empfangen. Im drauffolgenden Schritt, dargestellt in Fig.2c, sendet die Ventilsteuereinheit 2a über ihren Sendeausgang 8a ein Diagnosedatenpaket, welches Daten über den Zustand des zugeordneten Ventils umfasst, an den Empfangseingang 7 der Hauptsteuereinheit 1 und gibt gleichzeitig die Sende- und Schreibberechtigung über die, hier nicht dargestellte, Ansteuerleitung 9b an die Ventilsteuereinheit 2b weiter. Direkt im Anschluss daran versetzt sich die Ventilsteuereinheit 2a in den passiven Zustand zurück. Wie in Fig.2d dargestellt, ist nun die Ventilsteuereinheit 2b aktiviert und kann in Folge dessen das Steuerdatenpaket von der Hauptsteuereinheit 1 empfangen, während sich alle anderen Ventilsteuereinheiten in passivem Zustand befinden. Im nächsten Schritt, wie dargestellt, in Fig.2e, antwortet die Ventilsteuereinheit 2b wiederum mit einem Diagnosedatenpaket an die Hauptsteuereinheit 1 und gibt gleichzeitig die Sende- und Schreibberechtigung an die benachbarte Ventilsteuereinheit weiter.

Auf diese Art und Weise ist es möglich, nacheinander die für die einzelnen Ventilsteuereinheiten bestimmten Datenpaket zu versenden und dabei auf eine Adressierung zu verzichten.

### Bezugszeichenliste

- **1**: Hauptsteuereinheit
- **2a-2d**: Ventilsteuereinheiten
- **3**: Empfangsleitung
- **4**: Sendeleitung
- **5**: Sendeausgang Hauptsteuereinheit
- **6a-6d**: Empfangseingänge Ventilsteuereinheiten
- **7**: Empfangseingang Hauptsteuereinheit
- **8a-8d**: Sendeausgänge Ventilsteuereinheiten
- **9a-9d**: Ansteuerleitungen

## Patentansprüche

1. Elektronische Steuer- und Diagnoseeinrichtung zum Betreiben einer Ventileinheit mit einer Hauptsteuereinheit (1) und einer, der Anzahl an Ventilen entsprechenden Zahl an Ventilsteuereinheiten (2a-2d), welche jeweils Empfangseingänge (7, 6a-6d) und Sendeausgänge (5, 8a-8d) zur gegenseitigen Kommunikation aufweisen, wobei der Sendeausgang (5) der Hauptsteuereinheit (1) über eine gemeinsame Empfangsleitung (3) mit den Empfangseingängen (6a-6d) der Ventilsteuereinheiten (2a-2d) und der Empfangseingang (7) der Hauptsteuereinheit (1) über eine gemeinsame Sendeleitung (4) mit den Sendeausgängen (8a-8d) der Ventilsteuereinheiten (2a-2d) verbunden ist,
**dadurch gekennzeichnet, dass** die Hauptsteuereinheit (1) sowie die Ventilsteuereinheiten (2a-2d) zusätzliche Anschlüsse aufweisen und über diese durch Ansteuerleitungen (9a-9d) nach Art eines Token-Rings aneinandergereiht sind, um durch Weiterreichen eines Signals in Form einer Lese- und Schreibberechtigung die einzelnen Ventilsteuereinheiten (2a;2b;2c;2d) der Reihe nach zu aktivieren.

2. Elektronische Steuer- und Diagnoseeinrichtung nach Anspruch 1,
**dadurch gekennzeichnet, dass** eine Spannungsversorgung der Ventilsteuereinheiten (2a-2d) mittels Versorgungsleitungen über die Hauptsteuereinheit (1) stattfindet.

3. Elektronische Steuer- und Diagnoseeinrichtung nach Anspruch 1 oder 2,
**dadurch gekennzeichnet, dass** die Hauptsteuereinheit (1) und die Ventilsteuereinheiten (2a-2d) LED's zum Anzeigen von Übertragungs- und Kommunikationsfehlern aufweisen.

4. Elektronische Steuer- und Diagnoseeinrichtung nach einem der Ansprüche 1-3,
**dadurch gekennzeichnet, dass** zusätzlich auch eine Ansteuerleitung zwischen der letzten Ventilsteuereinheit (2d) der Aneinanderreihung und der Hauptsteuereinheit (1) vorgesehen ist.

5. Verfahren zum Betreiben einer elektronischen Steuer- und Diagnoseeinrichtung nach einem der vorhergehenden Ansprüche,
**dadurch gekennzeichnet, dass** ein Signal in Form einer Lese- und Schreibberechtigung entlang der Aneinanderreihung der Ventilsteuereinheiten (2a-2d) nach Art eines TokenRinges weitergereicht wird, wodurch die jeweilige, das Signal empfangende Ventilsteuereinheit (2a;2b;2c;2d) von einem passiven in einen aktiven Zustand versetzt wird, um Daten von der Hauptsteuereinheit (1) zu empfangen und Daten an diese zu senden, anschließend das Signal an die benachbarte Ventilsteuereinheit (2a;2b;2c;2d) weiterleitet, und anschließend in den passiven Zustand zurückkehrt.

6. Verfahren nach Anspruch 5,
**dadurch gekennzeichnet, dass** Datenübertragungen ausgehend von der Hauptsteuereinheit (1) zu den Ventilsteuereinheiten (2a-2d) mittels einer Timerfunktion in konstanten Zeitabständen durchgeführt werden.

7. Verfahren nach Anspruch 5 oder 6,
**dadurch gekennzeichnet, dass** der Prozess des Versetzens der jeweiligen Ventilsteuereinheit (2a;2b;2c;2d) in einen aktiven Zustand und der Rückkehr in den passiven Zustand gemäß einer festen Interruptroutine durchgeführt wird.

8. Verfahren nach einem der Ansprüche 5-7,
**dadurch gekennzeichnet, dass** bei jedem Senden eines Datenpakets der Hauptsteuereinheit (1) zu der jeweils aktiven Ventilsteuereinheit (2a;2b;2c;2d) ein Bit gesetzt wird, welches bei einer Antwort in Form des Sendens eines Datenpaktes durch die jeweils aktive Ventilsteuereinheit (2a;2b;2c;2d) wieder rückgesetzt wird.

9. Verfahren nach einem der Ansprüche 5-8,
**dadurch gekennzeichnet, dass** falls jede Ventilsteuereinheit (2a-2d) nicht innerhalb einer Zeitspanne von 4 ms von der Hauptsteuereinheit (1) ein Datenpaket erhält dies durch das jeweilige LED der Ventilsteuereinheit (2a-2d) angezeigt wird.

10. Verfahren nach einem der Ansprüche 5-9,
**dadurch gekennzeichnet, dass** die Anzahl an Ventilsteuereinheiten (2a-2d) in der Hauptsteuereinheit (1) vor Beginn der Kommunikation festgelegt wird.

11. Computerprogrammprodukt für eine Einrichtung nach einem der Ansprüche 1 bis 4, welche nach einem Verfahren nach einem der Ansprüche 5 bis 10 betreibbar ist, wobei die Routine zur Aktivierung der jeweiligen Ventilsteuereinheit und zur Übersendung von Datenpaketen zwischen der Hauptsteuereinheit und der Ventilsteuereinheit durch entsprechende, in einer Software hinterlegte Steuerungsbefehle umgesetzt ist.

12. Datenträger mit einem Computerprogrammprodukt nach Anspruch 11.
